# EUROPEAN PATENT APPLICATION

(11) **EP 0 594 421 A1**
(43) Date of publication of application: **27.04.1994**
(21) Application number: 93308366.9
(22) Date of filing: 20.10.1993
(51) Int. Cl.: H01J 49/08, G01N 23/227

(54) **Electron spectrometer**

(30) Priority: 21.10.1992 GB 9222135
(71) Applicant: FISONS plc, Ipswich Suffolk IP1 1QH (GB)
(72) Inventor: Tindall, Ian Francis, Crawley, West Sussex RH10 7BU (GB); Amin, Vipulchandra, Surrey RH6 9NB (GB); Enck, Richard S., Jr., San Jose, California 95218 (US)
(74) Representative: Tomlinson, Kerry John

(57) **Abstract**

An x-ray source for use in an electron spectrometer comprises a cathode filament (23), focussing means (28,29) and a target (24) which is part of the vacuum chamber housing (10) of the electron spectrometer. The housing (10) itself acts as an anode. By forming the target as part of the vacuum housing, the spectrometer may be more economically and compactly constructed. The target may also comprise part of the energy analysing system associated with the spectrometer.

## Description

This invention relates to an electron energy spectrometer capable of analysing electrons emitted from the surface of a sample by an incident beam of radiation consisting of photons or electrons. The invention is particularly but not exclusively useful in a spectrometer having an energy analyser of the toroidal capacitor type.

Such spectrometers are well established as a means for investigating the chemical nature of surfaces. Since each species on the surface emits electrons that are characteristic of its chemical state, such electron spectra provide useful information. It is common to refer to the use of such techniques as electron spectroscopy for chemical analysis (ESCA); the terms X-ray photoelectron spectroscopy (XPS) and Auger electron spectroscopy (AES) are also frequently used. A review of this field may be found in Electronic Properties of Surfaces compiled by M. Prutton, published by Adam Hilger, 1984 and in Modern Techniques of Surface Science by D. P. Woodruff and T. A. Delcher, published by Cambridge University Press, 1986.

The requirements for ESCA are well understood so that almost all electron spectrometers are constructed in a similar manner to meet these needs. A high vacuum chamber is used to contain the sample and would typically be maintained at the required pressure by a vacuum pump such as a diffusion pump, ion getter pump or turbomolecular pump. The vacuum chamber of an electron spectrometer will have a number of apertures onto which further elements of the device may be connected by means of flanges, such further elements including an energy analysing means and a source of ionising radiation.

The energy analysing means may be of the electrostatic or magnetic deflection type. An energy analyser based on a toroidal capacitor has been found to be particularly suited forthe low energy electrons produced by photoemission and the Auger effect. The term "toroidal capacitor" is used herein to refer to electrostatic energy analysers which comprise two electrodes which are sectors of toroidal surfaces and in which the equipotential surfaces are substantially sectors of toroidal surfaces, at least close to the electrodes. Most commonly the electrodes are sectors of spherical surfaces; various sector angles between 90° and 270° are used, with angles around 180° being favoured. Those energy analysers having a sector angle of approximately 180° are also referred to as concentric hemispherical analysers (CHA). As electrons pass through the analyser they are dispersed in energy along an axis and a particular energy may be selected and measured by suitable means typically comprising an apertured plate and channel electron multiplier.

A further commonly used electrostatic analyser comprises two concentric cylinders which accept electrons in a conical annulus about a mean angle from the axis of the analyser. Such a device is referred to as a cylindrical mirror analyser (CMA).

The source of ionising radiation will most often be an x-ray or electron gun connected to the sample chamber by means of a flange. A source produces x-rays by the bombardment of a target which'forms part of an anode. Electrons are emitted from a filament and accelerated toward the anode, by a suitable electrical potential, where x-ray production takes place. Commonly used materials for the target include magnesium, aluminium, copper and titanium. The anode will usually be a substrate of high thermal conductivity with a target of the required material deposited onto this. Cooling of the anode is accomplished by ducts through which a cooling medium is pumped or by rotation of the anode. An x-ray source of the type described may be found in UK patent GB2133208.

The x-rays produced by such a source have a broad range of energies characterised by peaks of higher intensity, which derive from the excited states of the target material. For some applications it is desirable to have x-rays of only a single energy. This may be achieved by a crystal monochromator which makes use of Bragg reflection to obtain such x-rays. In a crystal monochromator, reflection from the crystal planes gives rise to constructive interference for particular wavelengths. The lattice spacing and angle of x-ray incidence of the crystal determine which x-ray wavelength is selected. It is found that the lattice spacing of a quartz crystal is well suited for obtaining a monochromated beam of AI Ka x-rays with photon energy hy = 1486.6eV.

The material from which an electron spectrometer is constructed is influenced by the need for high vacuum to be maintained. Commercially available spectrometers are constructed from low porosity stainless steel. This material has the property of a low vapour pressure over the temperature range at which the instrument is operated and does not absorb significant amounts of gaseous substances from the atmosphere, which may "outgas" over time into the vacuum chamber.

The previously described form of electron spectrometer is ideally suited for the study of the chemical nature of surfaces. There are, however, a number of disadvantages to such a device, not least of which are the high cost and large size of this type of instrument. The cost of materials, allied to the difficulty of manufacture, has restricted the use of electron spectrometers to specialist applications.

It is an object of the present invention, therefore, to provide an electron spectrometer which is of lower cost, may be more easily manufactured and is more compact in size than a conventional electron spectrometer.

According to the invention there is provided an electron energy spectrometer for chemical analysis of a sample, said spectrometer comprising:
a vacuum chamber for containing a sample;
an energy analysing means for selecting the energy of electrons emitted from the sample by incident x-rays;
at least one filament or cathode which can be energised to cause the emission of electrons; and
a target which is bombarded by electrons from the filament or cathode to cause emission of x-rays onto the sample;
characterised in that said target forms part of the said vacuum chamber or energy analysing means.

In a preferred embodiment, the energy analysing means consists of an energy analyser of the toroidal capacitor type.

In a further preferred embodiment, the energy analysing means consists of both an electron lens to focus the electrons emitted from the sample and an energy analyser of the toroidal capacitor type. The electron lens may consist of one or a plurality of elements which may be electrostatic, magnetic or a combination of both.

In a yet further preferred embodiment, the x-rays emitted from the target are made mono-energetic by means of a crystal monochromator.

In a still further preferred embodiment, the electrons emitted by the filament or cathode are focussed and deflected by means of electrostatic or magnetic lens elements so that the electron beam so formed may be selectively incident on the x-ray target or directly onto the sample.

A number of embodiments of the invention will now be described by way of example only and with reference to the accompanying drawings, in which:
Fig 1 is a cross section of an electron energy spectrometer according to the invention;
Fig 2A is a section through the x-ray source of the spectrometer shown in Fig 1;
Fig 2B is a plan view of the filament assembly for the x-ray source shown in Fig 2A;
Fig 3 is a cross section of another embodiment of an electron energy spectrometer according to the invention;
Fig 4 is a section through the x-ray source of a further embodiment of an electron energy spectrometer according to the invention; and
Fig 5 is a view of the filament assembly for the x-ray source shown in Fig 4.

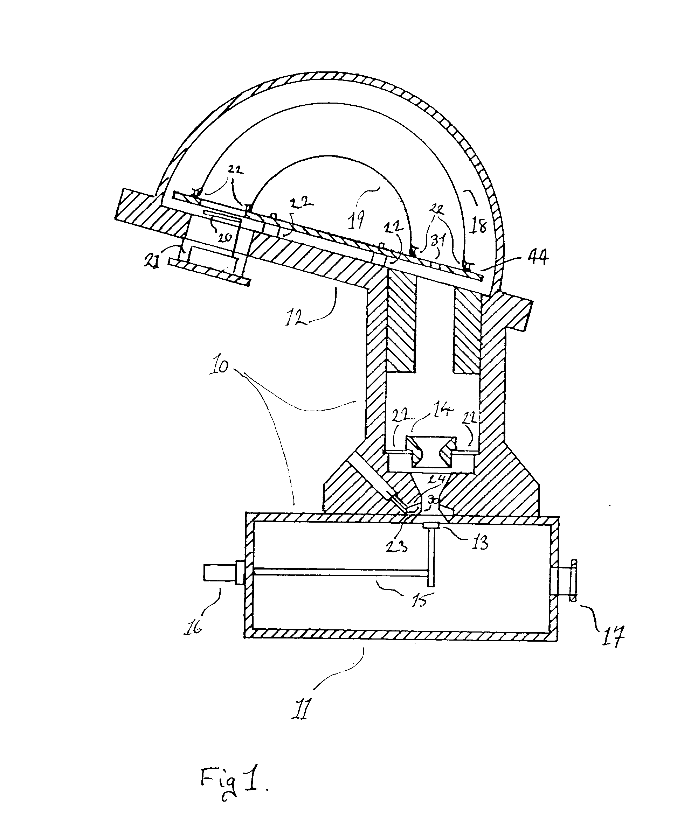

Hitherto, electron spectrometers have made use of x-ray source assemblies that are connected via a flange to the vacuum chamber. In order to construct such a spectrometer more economically and compactly, the present invention provides an x-ray source in which the anode constitutes a part of the vacuum chamber or energy analyzer. Figure 1 shows a preferred embodiment of the invention. The electron spectrometer consists of a vacuum chamber 10 made up in part of a sample chamber 11 and an analyser housing 12. A sample 13 is supported with the surface to be examined disposed in the object plane of an electron lens 14 by means of a rod 15, from a manipulator 16. The electron lens 14 may be of the electrostatic type as shown in the figure or of the magnetic type. The sample position may be adjusted by means of the manipulator 16. The vacuum chamber 10 is maintained at the desired pressure by a vacuum pump (not shown) typically a turbomolecular pump, acting through a flange 17.

The energy analysing means further comprises outer and inner hemispherical electrodes 18, 19. The lens 14 causes an image of the surface to be formed at the object plane of the energy analyser; this in turn forms an energy dispersed image of the sample which is detected by a suitable device such as a channel electron multiplier or channel plate 20 and electronically recorded by signal processing equipment 21. The energy of the electrons may be varied by changing the electrical potential of their environment: usually this is set to retard them so that the pass energy of the analyser may be set to a low value to increase the energy resolution. To enable the analyser, analyser base plate and lens elements 18, 19, 44, 14 to be maintained at the correct potential they are held in place by insulating supports 22.

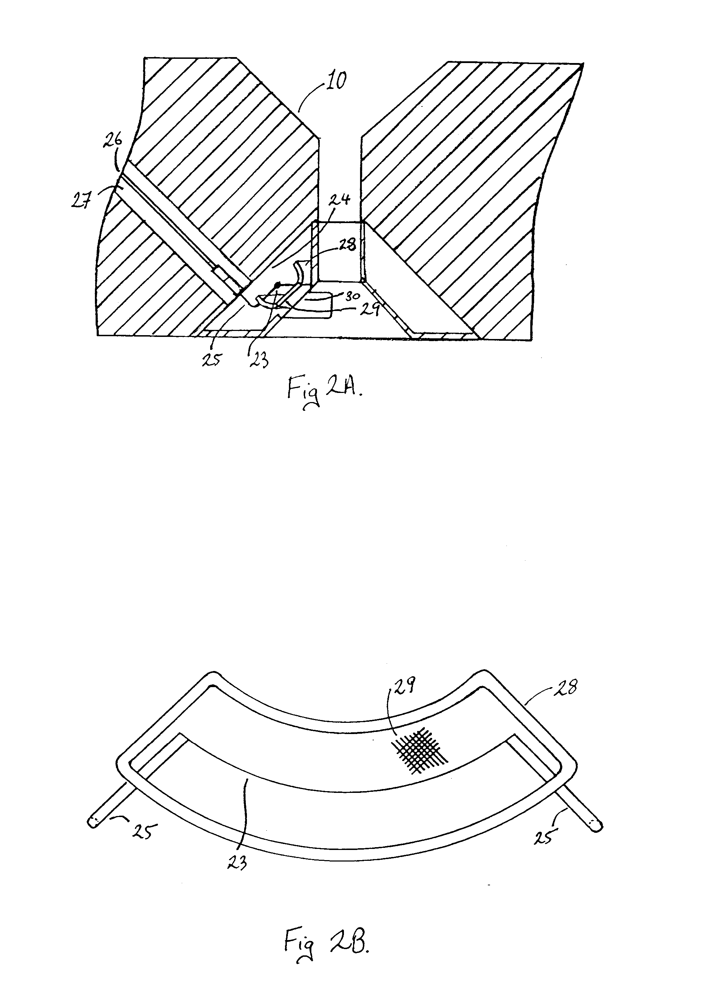

The primary exciting beam, in this case x-rays, is provided by an x-ray source, which has a filament 23 operating as a cathode and uses the vacuum chamber 10 as the anode of which the x-ray target 24 is a part. A more detailed view of the x-ray source and filament may be found in Figures 2Aand 2B respectively. Referring to these figures, the filament 23 is held in place by two filament supports 25 and will preferably be made of tungsten. The filament supports 25 are connected to high voltage feedthroughs 26 isolated by insulators 27. The x-ray source has focussing means which consist of a mounting electrode 28 and a central mesh 29 filling the space inside electrode 28. The focussing means and filament 23 are connected at one end, while the other end of the filament 23 is isolated by means of an insulating support to allow biasing, with respect to the cathode, to provide a filament current.

The x-ray target 24 is operated as the anode and may be formed by deposition of a suitable material onto the vacuum chamber 10 or may be the vacuum chamber itself. Following manufacture, the target must be made free from contaminants so that a well- characterised x-ray spectrum is obtained. The presence of contaminants in sufficient amounts can lead to the production of "ghost" features in the electron spectrum and is therefore undesirable.

Electrons are produced from the filament 23 by passage of an electric current which causes thermionic emission. The cathode is biased to a high negative potential, typically -15kV, with respect to the anode which will normally be at earth potential. The electrons from the filament 23 will be attracted toward the anode by the electric field and will strike the target 24 causing x-ray emission. It is also advantageous to angle the target surface with respect to the incoming electrons so that the x-ray flux is optimised. The electric field is sufficient to confine the emitted electrons so that they do not impinge anywhere other than the target 24.

The electrons impacting on the target 24 will give rise to the production of x-rays, chiefly those characteristic of the target material. A portion of the x-rays produced will pass almost unhindered through the central meshed portion 29 of the focussing means. These x-rays impinge on a thin window 30 before illuminating the sample 13. The window 30 forms a termination of the field between the window and the focussing means and will also produce a low energy flood of electrons due to a portion of the x-ray flux interacting with the window material near the sample 13 to provide charge neutralisation if necessary. It is desirable to choose a low atomic number material for the window 30 so that the majority of incident x-rays pass through unaffected, suitable materials being beryllium or aluminium.

A particularly preferred material for the construction of the vacuum chamber 10 and x-ray anode is aluminium oran alloy of aluminium. The use of aluminium offers a number of advantages over stainless steel, including ease of casting and machining, the ability to contain high vacuum and an x-ray emission spectrum that is well established for surface analysis. If the vacuum chamber 10 is constructed from an alloy of aluminium it may be advantageous to deposit an x-ray target 24 of pure aluminium so that the x-rays obtained are well characterised. Other suitable materials for use as an x-ray target are well-known and could include copper, silver, tungsten or silicon.

The x-ray source and filament assembly of Figures 2A and 2B form one embodiment in which the filament 23 occupies the arc of a circle in a plane parallel to that occupied by the anode. By the use of a plurality of sources or using a near-circular source it is possible to illuminate all parts of the sample and avoid the shadowing phenomena that can arise when a conventional x-ray source is used.

The x-ray source shown in Figure 2A has a target 24 which is arcuate on the conical surface of the vacuum chamber 10. The filament 23, electrode 28, mesh 29 and x-ray window 30 are placed such that the filament 23 remains equidistant from the target 24 along its entire length. Figure 2B shows a plan view of the filament assembly laid flat before placement in the x-ray source. When in place the electrode 28 and mesh 29 form part of a conical surface in a plane parallel to both the x-ray window 30 and x-ray target 24. Such a layout is preferred since it produces a uniform emission of x-rays along the arc of x-ray window 30.

An x-ray source will typically deposit several hundred watts of power into the target 24 when operating under normal conditions. The majority of this power is dissipated in the form of heat and only a small percentage is emitted as x-rays. In a conventional x-ray source this may lead to severe heating problems and vaporisation of the target material. This problem is normally overcome by the use of continuous water cooling or rapid rotation of the x-ray anode. It is an advantage of the invention that such problems are not as great since the x-ray target 24 is in thermal contact with the vacuum chamber 10. Local heating is reduced by the dissipation of heat into the vacuum chamber 10 which may be conveniently cooled externally by means of air or water. Under typical operating conditions, fins located on the vacuum chamber 10 (not shown) provide sufficient air cooling. In addition, with this configuration the electron flux is spread over a large area thereby lowering the power density on the anode.

It is practical to adjust the geometry of the electron spectrometer of the invention in a number of ways. The electron lens 14 may be dispensed with altogether provided that the energy analyser electrodes 18,19 are moved sufficiently close to the sample to allow passage of electrons directly into the analyser. In such an instance the x-ray source would be placed around the analyser entrance aperture 31 so that the anode forms part of the electron energy analyser. The resulting electron spectrometer would be of very compact size. A further design may incorporate the x-ray source into an earthed element of the electron lens 14 which may also form part of the vacuum enclosure. In this instance the close proximity of the lens to the sample would allow for the collection of a large solid angle of electrons from the sample surface.

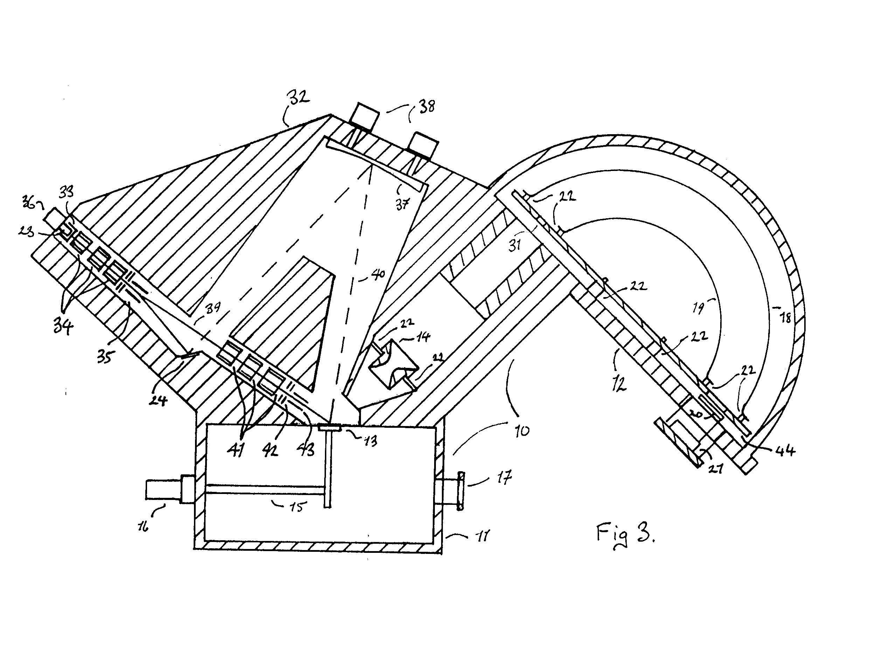

For applications where high precision measurements are required it is often advantageous to use a beam of ionising radiation which has a well-defined energy. A monochromatic x-ray source gives an improved signal to background ratio due to the elimination of high energy bremsstrahlung x-rays and the removal of satellite lines. The production of such monochromatic radiation beams for x-rays is well known and is commonly achieved in ESCA by the use of a crystal monochromator. An embodiment of the invention which incorporates a crystal monochromator is shown in Figure 3. The electron spectrometer vacuum chamber 10 contains a monochromator housing 32 in addition to the sample chamber 11 and analyser housing 12 described previously in relation to Figure 1.

X-rays are generated by means of electrons accelerated from a filament 23 to a target 24. The vacuum chamber 10 acts as an anode and will typically be at earth potential. It is advantageous if the filament 23 forms part of an electron gun which may be used to focus and steer the electrons onto the target 24 and allows optimisation of the monochromator focus. An electron gun suitable for this application might contain a filament 23, accelerating anode 33, focussing electrodes 34 and scanning electrodes 35 or a filament 23, controlling electrode 33, anode and lens 34. The electrodes are supplied with voltages through an electrical feedthrough 36 and the electrodes are held in place by insulating supports (not shown).

X-rays are generated at the target 24 and illuminate the monochromator crystal 37 where x-rays of a particular wavelength are selected and focussed onto the sample 13. The position and focus of the x-ray beam may be adjusted by mounting the monochromator 37 on a gimbal arrangement 38. Aluminium Ka x-rays with a photon energy of 1486.6eV are known to be selected by a quartz crystal monochromator and are commonly used for ESCA. A particularly preferred embodiment of the invention consists of an aluminium or aluminium alloy anode and target 24 and a quartz monochromator 37. It is possible using such a monochromator to obtain a focussed x-ray beam which affects only a small area of the sample; typically the dimensions of such an area may be one millimetre square or less. The usefulness of the electron spectrometer shown in Figure 3 may be further increased by allowing the electron beam to be directed by scanning electrodes 35 so that beam interacts with either the sample 13 or the target 24. Such a device has the option of two different types of ionising radiation with which to study the sample 13, either electrons or x-rays. The scanning electrodes 35 allow the selection of an electron beam 39 or an x-ray beam 40. The electron beam 39 will give rise to the production of Auger electrons and secondary electrons from the sample 13. The scanning electrodes 35 enable the electron beam to move across the sample surface and provide spatially resolved information. The Auger electrons may be analysed and measured, in an identical manner to those generated by x-rays, to provide chemical state information from the sample surface 13. Secondary electrons may be collected by a suitable detector of the scintillator/ photomultipliertype (not shown) near to the sample 13 to provide an energy integrated electron image of the sample 13 in the manner of a scanning electron microscope (SEM). The use of an electron beam is advantageous for spatial imaging since it may be more easily focussed and steered than an x-ray beam. The range of such an electron beam will typically be 100eV 5keV in energy, with a beam current of between 1 OOnA- 50pA and a spot size of 5f..lm - 50µm.

In order to improve the spatial resolution it is desirable to provide further focussing and steering of the electron beam in close proximity to the surface to be studied. Such elements would preferably consist of lens electrodes 41, stigmator 42 and scanning electrodes 43. The lens electrodes 41 act to re-focus the beam and their proximity to the sample 13 helps to reduce spreading of the beam due to space-charge effects. The stigmator 42 acts to reduce aberrations while the scanning electrodes 43 enable scanning of the electron beam across the sample surface.

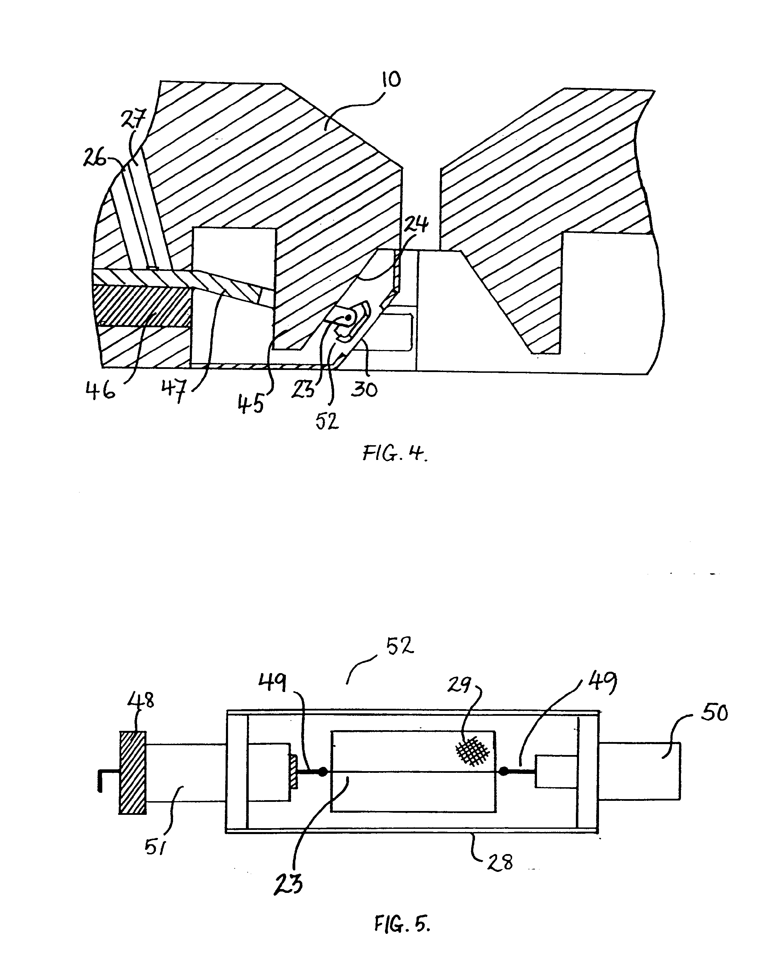

A further preferred embodiment of an x-ray source for an electron spectrometer according to the invention is shown in Figures 4 and 5. In this embodiment, the x-ray target 24 is formed on one face of a downwardly-protruding portion 45 of the vacuum chamber 10. The x-ray target 24 may be formed by deposition of a suitable material onto protrusion 45 or may consist of the protrusion 45 itself. The protrusion 45 projects downwards between two arms of a filament carrier 47 bearing a filament 23. The filament carrier 47 is supported by a ceramic block 46 and electrical connections to it are made via high voltage feedthroughs 26 isolated by insulators 27. A plurality of such protrusions 45 may be disposed around the sample, each having an x-ray target 24 and filament assembly 52 so that all parts of the sample may be illuminated by x-rays, thereby avoiding shadowing effects.

The filament assembly 52 is shown in greater detail in Figure 5. A filament 23 is held between contact legs 49. The x-ray source has focussing means which consist of an electrode 28 and a mesh 29. One end of the filament 23 is connected to the focussing means, while the other end is isolated by means of an insulator 48. This allows biasing with respect to the cathode so that a filament current may be provided. The filament assembly is held in place by the carrier at supports 50 and 51. Since the filament in this embodiment is straight, and not curved into the arc of a circle as in the embodiment shown in figures 2A and 2B, it is easy to manufacture and to mount. The filament 23 produces electrons which strike the x-ray target 24 to produce x-rays in the manner previously described.

## Claims

1. An electron energy spectrometer, comprising:
a vacuum chamber for containing a sample;
an energy analysing means for selecting the energy of electrons emitted from the sample;
at least one filament or cathode which can be energised to cause the emission of electrons; and
a target which is bombarded by electrons from the filament or cathode to cause emission of x-rays onto the sample;
characterised in that said target forms part of the said vacuum chamber or energy analysing means.

2. A spectrometer as claimed in claim 1, in which an electron lens forms part of the said energy analysing means, the said electron lens being electrostatic, magnetic or a combination thereof.

3. Aspectrometeras claimed in claim 2, in which the target forms part of said electron lens.

4. A spectrometer as claimed in claim 1, 2, or 3, which has means for monochromating the x-rays before interaction with said sample.

5. Aspectrometeras claimed in claim 4, in which the monochromating means is a quartz crystal monochromator.

6. A spectrometer as claimed in any preceding claim, in which electrons from the filament or cathode may be steered either onto the target or directly onto the sample.

7. Aspectrometeras claimed in claim 6, in which the electrons from the filament or cathode are steered and focussed by means of a plurality of electrode voltages.

8. A spectrometer as claimed in any preceding claim, wherein the energy analyser is of the electrostatic capacitor type.

9. A spectrometer as claimed in any preceding claim, wherein the target is cooled by means of a fluid.

10. Aspectrometeras claimed in claim 9, wherein the cooling fluid is air.

11. Aspectrometeras claimed in claim 9, wherein the cooling fluid is water.

12. A spectrometer as claimed in any preceding claim, wherein the target is constructed from aluminium or an aluminium alloy, or a coated aluminium alloy.
